# EUROPEAN PATENT APPLICATION

(11) **EP 4 671 982 A1**
(43) Date of publication of application: **31.12.2025**
(21) Application number: 25159084.0
(22) Date of filing: 20.02.2025
(51) Int. Cl.: G06F 9/48, G06F 9/50

(54) **RESOURCE SCHEDULING METHOD AND APPARATUS BASED ON STORAGE SYSTEM, MEDIUM, AND ELECTRONIC DEVICE**

(30) Priority: 27.06.2024 CN 202410852643
(71) Applicant: Beijing Volcano Engine Technology Co., Ltd., Beijing 100190 (CN)
(72) Inventor: CHEN, Yijian, Beijing, 100028 (CN)
(74) Representative: Isarpatent

(57) **Abstract**

A resource scheduling method and apparatus based on a storage system, a medium, and an electronic device are provided, so that data processing tasks of different object buckets can be scheduled more fairly, and the timeliness and efficiency of task completion are improved. The method includes: acquiring a manifest file respectively corresponding to each object bucket in a storage system; performing loop traversal allocation for each object bucket based on a preset object allocation rule to obtain a target object allocation quota for each object bucket; generating a data processing task corresponding to each object bucket based on the target object allocation quota for each object bucket and the manifest file corresponding to each object bucket, where the data processing task is a task executed according to a manifest file granularity, and a number of expired objects in a manifest file executed by a total data processing task of an object bucket is not greater than a target object allocation quota for the object bucket; and controlling the data processing task of each object bucket to be executed in parallel.

## Description

### CROSS-REFERENCE TO RELATED APPLICATION

This application claims the priority to and benefits of the Chinese Patent Application, No. 202410852643.2, which was filed on June 27, 2024, and is hereby incorporated by reference in its entirety.

### TECHNICAL FIELD

The present disclosure relates to a field of data processing technology and, in particular, to a resource scheduling method and apparatus based on a storage system, a medium, and an electronic device.

### BACKGROUND

A bucket is a container for storing object data. Lifecycle management refers to setting a management policy for an object in the bucket, so that the object is deleted or transferred to another storage type after being stored for a period of time, thereby reducing consumption of storage resources.

According to the related art, objects in a bucket are scanned based on a management policy, an expired object that meets the management policy is placed into a processing task queue, the processing task queue is executed, and the expired object is deleted or transferred to another storage type. Because of differences in the number of expired objects, processing time, and the processing sequence in the queue for different buckets, how to globally and efficiently schedule processing tasks of different buckets, improve task processing efficiency, and reduce storage costs is a technical problem that needs to be urgently solved in the industry at present.

### SUMMARY

This Summary is provided to introduce concepts in a simplified form that are described in detail in the following Detailed Description. This Summary is not intended to identify key or essential features of the claimed technical solutions, nor is it intended to be used to limit the scope of the claimed technical solutions.

At least one embodiment of the present disclosure provides a resource scheduling method based on a storage system. The method includes:
acquiring a manifest file respectively corresponding to each object bucket in a storage system, where the manifest file includes a list of scanned objects of the object bucket and the number of expired objects in the list of scanned objects;
performing loop traversal allocation for each object bucket based on a preset object allocation rule to obtain a target object allocation quota for each object bucket, where the preset allocation rule is used to control object allocation for the object bucket based on a single-bucket allocation quota limit value and/or a total allocation quota limit value;
generating a data processing task corresponding to each object bucket based on the target object allocation quota for each object bucket and the manifest file corresponding to each object bucket, where the data processing task is a task executed according to a manifest file granularity, and the number of expired objects in a manifest file executed by a total data processing task of an object bucket is not greater than a target object allocation quota for the object bucket; and
controlling the data processing task of each object bucket to be executed in parallel.

At least one embodiment of the present disclosure provides a resource scheduling apparatus based on a storage system. The apparatus includes:
an acquisition module configured to acquire a manifest file respectively corresponding to each object bucket in the storage system, where the manifest file includes a list of scanned objects of the object bucket and a number of expired objects in the list of scanned objects;
an allocation module configured to perform loop traversal allocation for each object bucket based on a preset object allocation rule to obtain a target object allocation quota for each object bucket, where the preset allocation rule is used to control object allocation for the object buckets based on a single-bucket allocation quota limit value and/or a total allocation quota limit value;
a generation module configured to generate a data processing task corresponding to each object bucket based on the target object allocation quota for each object bucket and the manifest file corresponding to each object bucket, where the data processing task is a task executed according to a manifest file granularity, and a number of expired objects in a manifest file executed by a total data processing task of an object bucket is not greater than a target object allocation quota for the object bucket; and
an execution module configured to control the data processing task of each object bucket to be executed in parallel.

At least one embodiment of the present disclosure provides a non-transitory computer-readable storage medium storing computer programs which, upon being executed by a processor, perform the steps of the method according to at least one embodiment of the present disclosure.

At least one embodiment of the present disclosure provides an electronic device. The electronic device includes:
at least one memory, storing computer programs; and
at least one processor configured to execute the computer programs in the at least one memory to perform the steps of the method according to at least one embodiment of the present disclosure.

At least one embodiment of the present disclosure provides a computer program product including computer programs which, upon being executed by a processor, perform the steps of the method according to at least one embodiment of the present disclosure.

Other features and advantages of the present disclosure will be described in detail in the following Detailed Description.

### BRIEF DESCRIPTION OF DRAWINGS

The above and other features, advantages, and aspects of embodiments of the present disclosure become more apparent with reference to the following specific embodiments and the drawings. Throughout the drawings, the same or similar reference numerals refer to the same or similar elements. It is to be understood that the drawings are schematic and that parts and elements are not necessarily drawn to scale. In the drawings:
Fig. 1 is a flowchart of a resource scheduling method based on a storage system according to an exemplary embodiment of the present disclosure;
Fig. 2 is a flowchart of a scanning task according to an exemplary embodiment of the present disclosure;
Fig. 3 is a schematic diagram of a task allocation process according to an exemplary embodiment of the present disclosure;
Fig. 4 is a schematic diagram of task information according to an exemplary embodiment of the present disclosure;
Fig. 5 is a block diagram of a resource scheduling apparatus based on a storage system according to an exemplary embodiment of the present disclosure; and
Fig. 6 is a structural schematic diagram of an electronic device according to an exemplary embodiment of the present disclosure.

### DETAILED DESCRIPTION

Embodiments of the present disclosure are described in more detail below with reference to the drawings. Although some embodiments of the present disclosure are shown in the drawings, it should be understood that the present disclosure may be implemented in various forms and should not be construed as limited to the embodiments set forth herein. On the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be understood that the various steps described in the method implementations of the present disclosure may be performed in different orders and/or in parallel. In addition, the method implementations may include additional steps and/or omit the illustrated steps. The scope of the present disclosure is not limited in this respect.

The term "include/comprise" and its variants as used herein are open-ended inclusions, that is, "include/comprise but not limited to". The term "based on" is "based at least in part on". The term "one embodiment" means "at least one embodiment"; the term "another embodiment" means "at least one another embodiment"; the term "some embodiments" means "at least some embodiments". Relevant definitions of other terms will be given in the following description.

It should be noted that concepts such as "first" and "second" mentioned in the present disclosure are only used to distinguish between different apparatuses, modules, or units, and are not used to limit the order or interdependence of functions performed by these apparatuses, modules, or units.

It should be noted that the modification of "one" and "a plurality of" mentioned in the present disclosure is schematic rather than restrictive, and those skilled in the art should understand that it should be understood as "one or more" unless the context clearly indicates otherwise.

The names of messages or information exchanged between a plurality of apparatuses in the implementations of the present disclosure are only for illustrative purposes, and are not intended to limit the scope of these messages or information.

It should be understood that before using the technical solutions disclosed in the embodiments of the present disclosure, the user should be informed of the type, use scope, use scenario, and the like of the personal information involved in the present disclosure and the user's authorization should be obtained through an appropriate manner in accordance with relevant laws and regulations.

For example, in response to receiving an active request from the user, prompt information is sent to the user to explicitly prompt the user that the operation requested to be performed will require acquisition and use of the user's personal information. Therefore, the user can independently select whether to provide personal information to software or hardware such as an electronic device, an application, a server, or a storage medium that performs the operation of the technical solution of the present disclosure according to the prompt information.

As an optional but non-limiting implementation, the manner of sending prompt information to the user in response to receiving the user's active request may be, for example, a pop-up window, and the prompt information may be presented in the pop-up window in text. In addition, the pop-up window may carry a selection control for the user to select "agree" or "disagree" to provide personal information to the electronic device.

It should be understood that the above process of notifying and acquiring user authorization is only schematic and does not constitute a limitation on the implementations of the present disclosure, and other manners that meet relevant laws and regulations may also be applied to the implementations of the present disclosure.

At the same time, it should be understood that the data involved in the technical solution (including but not limited to the data itself, acquisition or use of the data) should comply with the requirements of corresponding laws, regulations, and related provisions.

In the related art, lifecycle management mainly includes the following steps: firstly, a user sets an expiration policy for an object file for a bucket, for example, transferring to another storage type with less storage resource consumption after 3 days, deleting upon expiration after 7 days, or the like; then, an object storage service records a storage time when storing the object file; then, a lifecycle system performs a scanning task to scan the object file in the bucket and puts an object file that meets the expiration policy into a processing task queue; and finally, a data processing operation is performed to delete or transfer the expired object file in the processing task queue, thereby reducing consumption of storage resources.

Exemplarily, the expiration policy and the number of expired objects corresponding to each of buckets A, B, and C are different. Taking a processing task queue {A1, A2, A3, A4, B1, B2, B3, C1, C2} generated by the buckets A, B, and C as an example, because of different execution time required for different processing tasks, if the processing task of the bucket A requires a large amount of execution time, the processing tasks of the buckets B and C cannot be completed in time, that is, performing lifecycle management in the order of the processing task queue results in unfair scheduling of processing tasks of different buckets. Therefore, how to globally and efficiently schedule processing tasks of different buckets, improve task processing efficiency, and reduce storage costs is a technical problem that needs to be urgently solved in the industry at present.

In view of this, the present disclosure provides a resource scheduling method and apparatus based on a storage system, a medium, and an electronic device to solve the above technical problem.

The embodiments of the present disclosure are further explained below with reference to the drawings.

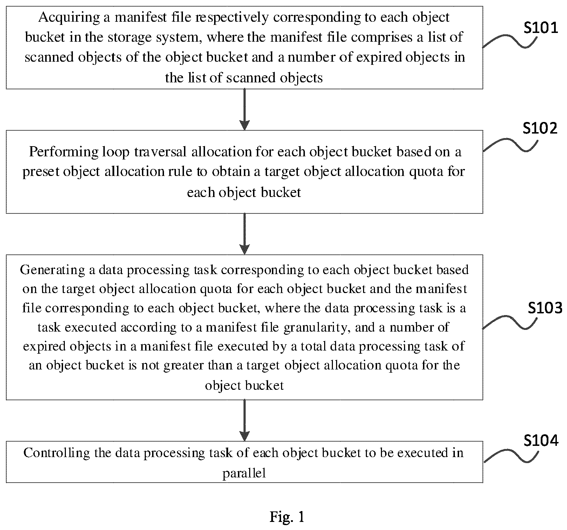

Fig. 1 is a flowchart of a resource scheduling method based on a storage system according to an exemplary embodiment of the present disclosure. Referring to Fig. 1, the method includes the following steps.

S101: acquiring a manifest file respectively corresponding to each object bucket in the storage system, where the manifest file includes a list of scanned objects of the object bucket and a number of expired objects in the list of scanned objects.

It should be understood that file data is stored in a key-value pair format, a file name is a key, and the file data is a value, and this key-value pair is called an object. A bucket is a container for storing object data, and all the objects must belong to a certain bucket, which is equivalent to a namespace.

S102: performing loop traversal allocation for each object bucket based on a preset object allocation rule to obtain a target object allocation quota for each object bucket.

The preset allocation rule is used to control object allocation for the object bucket based on a single-bucket allocation quota limit value and/or a total allocation quota limit value.

S103: generating a data processing task corresponding to each object bucket based on the target object allocation quota for each object bucket and the manifest file corresponding to each object bucket. The data processing task is a task executed according to a manifest file granularity. The number of expired objects in a manifest file executed by a total data processing task of an object bucket is not greater than the target object allocation quota for the object bucket.

S104: controlling the data processing task of each object bucket to be executed in parallel the data processing tasks of the object buckets are controlled to be executed in parallel.

According to the above method, the number of expired objects in a manifest file executed by a total data processing task of an object bucket is not greater than the target object allocation quota for the object bucket, that is, expired objects to be processed by each object bucket may be limited to the object allocation quota allocated to the object bucket. Therefore, it is ensured that the number of expired objects to be processed by each object bucket is relatively fair, so that data processing tasks of different object buckets can be scheduled more fairly, the timeliness and efficiency of task completion are improved, and the purpose of reducing storage costs is achieved.

It should be noted that the lifecycle system may perform object scanning on all buckets or specified buckets in the storage system at regular time intervals every day and generate corresponding data processing tasks, and expired objects are deleted or transferred by executing the data processing tasks.

It should be understood that for a bucket storing a huge amount of data, it takes a certain amount of time for the scanning service to complete the scanning tasks of all buckets. Therefore, the data processing tasks of the lifecycle system may be divided into a plurality of rounds for execution every day. The scanning service may be started at regular time intervals every day, and a round of data processing tasks is determined and executed at intervals of a preset time period. For example, the scanning service is started at 0:00 every day, a first round of data processing tasks is determined for manifest files from 0:00 to 1:00 at 1:00 and the first round of data processing tasks is executed between 1:00 and 2:00. At 2:00, a second round of data processing tasks is determined for manifest files from 1:00 to 2:00 and the second round of data processing tasks is executed between 2:00 and 3:00. Alternatively, in the case where there are remaining expired objects in the manifest files from 0:00 to 1:00, a second round of data processing tasks is determined for the remaining expired objects in the manifest files from 0:00 to 1:00 and the manifest files from 1:00 to 2:00 at 2:00 and the second round of data processing tasks is executed. By analogy, until all data processing tasks are completed. The start time of the scanning service and the interval between preset time periods may be set according to requirements, which is not limited in the present disclosure, so as to make full use of time and improve data processing efficiency.

In a possible implementation, the acquiring a manifest file respectively corresponding to each object bucket in a storage system includes: acquiring a lifecycle policy of each object bucket in the storage system; and sequentially scanning objects of each object bucket, matching scanned objects based on a corresponding lifecycle policy to obtain matched expired objects, counting a number of expired objects, and generating at least one manifest file for each object bucket upon completion of scanning.

Exemplarily, for each of the object buckets, a scanning task is performed. A scanned object is stored into an initial list of objects, and the scanned object is matched with a lifecycle rule corresponding to the object bucket to count the number of expired objects that meet the lifecycle rule. In the case where a preset manifest generation condition is met, the initial list of objects is used as the list of scanned objects to generate the manifest file including the list of scanned objects and the number of expired objects until the scanning task ends. The preset manifest generation condition includes at least one of the following: the number of objects in the initial list of objects being equal to a preset number; all objects in the object bucket having been scanned; or a scanning duration of the object bucket being equal to a preset scanning duration.

Exemplarily, taking the object bucket X as an example, a scanning task is performed for the object bucket X, and a scanned object Y1 is stored into a list. The object Y1 is matched with a lifecycle rule corresponding to the object bucket X. If the lifecycle rule is met, the number of expired objects of the object bucket X is incremented by 1, and the object Y2 continues to be scanned. By analogy, in the case where the preset manifest generation condition is met, the manifest file including the list of scanned objects {Y1, Y2,...} and the number of expired objects is obtained until the scanning task ends.

The lifecycle rule may be set according to requirements, for example, specifying a rule such as an object name prefix, a label, and an expiration date of the expired object, which is not limited in the present disclosure. The preset manifest generation condition may also be set according to requirements, for example, outputting one manifest file for every preset number of scanned objects, or completing scanning of all the objects in the object bucket. For example, 100,000 objects correspond to one manifest file. When there are 210,000 objects in the object bucket, two manifest files are output after 200,000 objects are scanned. After continuing to scan 10,000 remaining objects, all the objects in the object bucket have been completely scanned, and one manifest file is also output. Alternatively, one manifest file may be generated at intervals of the preset scanning duration, which is not limited in the present disclosure.

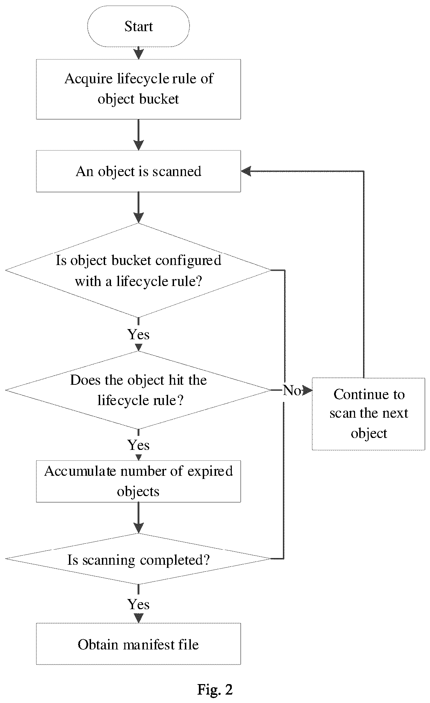

Exemplarily, with reference to Fig. 2, after the scanning task starts, the lifecycle rule of the object bucket that needs to be scanned is first acquired. After an object is scanned, it is first determined whether the object bucket corresponding to the object is configured with a lifecycle rule. If yes, it is further determined, based on features such as an object name prefix, a label, and a storage time of the object, whether the object hits the lifecycle rule. If not, after completing scanning rules of other functions, the next object may continue to be scanned. When the object bucket of the object is configured with the lifecycle rule and the object hits the lifecycle rule, it represents that the object is an expired object, and the number of expired objects is incremented by 1. Then, it is determined whether the preset manifest generation condition is met. If yes, the manifest file is output, and the counted number of expired objects is output to an HTTP (HyperText Transfer Protocol) header of the manifest file. If the lifecycle rule is not hit or the preset manifest generation condition is not met, the next object continues to be scanned until the scanning task ends.

The manifest file is obtained by outputting, in a file format, a list of objects in the bucket scanned by the scanning service, that is, a file including the list of scanned objects. A plurality of manifest files may be scanned for an object bucket. By determining in advance whether the object meets the lifecycle rule when the scanning task is performed, reference may be provided for fair allocation and scheduling of data processing tasks.

It is worth noting that there is at least one manifest file for an object bucket every day, and there may be a plurality of manifest files if the number of objects in the object bucket is large. In addition, the scanning task of the object bucket may be a dedicated scanning task for lifecycle management, or may be a general scanning task including security scanning, expired object scanning, and other functions, which may avoid resource waste caused by starting too many scanning tasks.

It should be noted that the lifecycle system is divided into a manager process and a worker process. The manager process is responsible for allocating manifest files to generate data processing tasks, and the worker process is responsible for executing data processing tasks.

Embodiments of the manager process are described below.

First, the manager process acquires the manifest files of all the object buckets. It should be understood that the embodiments of the present disclosure are illustrated by taking the generation process of a round of data processing tasks as an example. For example, manifest files obtained from 1:00 to 2:00 and remaining expired objects in manifest files not processed in the previous round are acquired at 2:00, which will not be repeated below. Then, the total number of expired objects (representing the number of unprocessed expired objects) and the number of processed objects (the number of processed expired objects) of each object bucket are calculated separately.

In a possible implementation, the performing loop traversal allocation for each object bucket based on a preset object allocation rule to obtain a target object allocation quota for each object bucket includes: sorting object buckets based on a preset bucket sorting rule to obtain a sequence of object buckets, where the preset bucket sorting rule is used to indicate sorting in ascending order according to an allocated object allocation quota in an object bucket, and sorting object buckets with equal allocated object allocation quota in ascending order based on a number of expired objects; allocating equal object allocation quota to each object bucket in turn based on the sequence of object buckets; and repeatedly performing the sorting object buckets based on a preset bucket sorting rule to obtain a sequence of object buckets and the allocating equal object allocation quota to each object bucket in turn based on the sequence of object buckets until the preset object allocation rule is met, so as to obtain the target object allocation quota for each object bucket.

Exemplarily, the following process is iteratively performed until the preset object allocation rule is met to obtain the target object allocation quota for each of the object buckets: sorting object buckets based on a preset sorting rule to obtain a sequence of object buckets; and allocating equal object allocation quota to each object bucket in turn based on the sequence of object buckets.

The preset object allocation rule includes at least one selected from a group consisting of: in response to an allocated object allocation quota of an object bucket reaching a number of expired objects of the object bucket and/or the single-bucket allocation quota limit value, ending object allocation for the object bucket, where the single-bucket allocation quota limit value includes at least one selected from a group consisting of an object processing quota limit value and a preset allocation quota limit value; in response to a total object allocation quota of all object buckets reaching the total allocation quota limit value, ending object allocation for all the object buckets; and in response to the allocated object allocation quota of each object bucket reaching a corresponding number of expired objects, ending object allocation for all the object buckets.

Exemplarily, the lifecycle system needs to send a request to an object storage service when processing expired objects, and the object storage service is used to provide operation interfaces such as object uploading, deleting, and converting storage types. Because the processing capability of the object storage service has an upper limit, it is possible to set a total upper threshold of object processing for all the object buckets as the total allocation quota limit value and an upper threshold of object processing for each object bucket as the corresponding object processing quota limit value, so as to avoid a case where a total target object allocation quota of all the object buckets exceeds the processing capability of all the object buckets or a target object allocation quota of a single object bucket exceeds the processing capability of the single object bucket.

Exemplarily, a round of data processing tasks is set with a corresponding single-round execution time, for example, one hour, which is not limited in the present disclosure. Then, it is possible to set the total upper threshold of object processing for all the object buckets = an upper threshold of total requests QPS × the single-round execution time × a discount factor, where the upper threshold of total requests QPS (Query Per Second) represents the number of expired objects that can be processed by the object storage service of all the object buckets every second, and the discount factor is configured in consideration of time-consuming of task allocation and scheduling and time-consuming of filtering unexpired objects that do not need to be processed from scanned objects, for example, 0.8, 0.9, or the like, which is not limited in the present disclosure.

Correspondingly, it may be set that the object processing quota limit value of a single object bucket = the upper threshold of requests QPS of the object bucket × the single-round execution time × the discount factor. In addition, for an object bucket newly configured with a lifecycle rule, the threshold may be calculated according to the period from the time point of configuring the rule on the current day to 24:00. For example, for a rule configured at 15:00, the upper threshold that can be processed by the object bucket on the current day = the object processing quota limit value × ((24-15)/24).

Exemplarily, in order to avoid a case where the data processing task of a single object bucket includes too many expired objects, which affects other object buckets from executing data processing tasks, it is also possible to set a preset allocation quota limit value for a single object bucket, for example, 1 billion, that is, after the single object bucket processes 1 billion objects, the quota allocation is not performed temporarily, and the quota allocation is preferentially performed for other object buckets. This may be set according to requirements, which is not limited in the present disclosure.

The following process is then iteratively performed. First, all the object buckets are classified and sorted. An object bucket list 1 in which the allocated object allocation quota does not exceed the preset allocation quota limit value and an object bucket list 2 in which the allocated object allocation quota exceeds the preset allocation quota limit value are classified. Then, for the object bucket list 1, the object buckets are sorted in ascending order based on the allocated object allocation quota, and the object buckets with equal allocated object allocation quota are sorted in ascending order based on the number of expired objects. Then, equal object allocation quota is allocated to each of the object buckets in turn based on the sorted order, for example, a quota of 1 million is allocated each time, which is set according to requirements and is not limited in the present disclosure. Until the preset object allocation rule is met, the allocation process of a single object bucket or all the object buckets ends, and the target object allocation quota for each object bucket is obtained.

In a possible implementation, the method further includes: after the target object allocation quota for each object bucket is obtained, in response to the total object allocation quota of all the object buckets being less than the total allocation quota limit value, selecting, from all the object buckets, a target object bucket whose target object allocation quota reaching the preset allocation quota limit value; performing loop traversal allocation for each target object bucket based on the preset object allocation rule to obtain a supplementary object allocation quota for each target object bucket; and generating a supplementary data processing task corresponding to each target object bucket based on the supplementary object allocation quota for each target object bucket and a manifest file corresponding to each target object bucket, where an execution priority of the data processing task is higher than an execution priority of the supplementary data processing task.

Exemplarily, after the object allocation quota for each object bucket is obtained, in response to the total object allocation quota of all the object buckets being less than the total allocation quota limit value, it indicates that the object storage service of all the object buckets has not reached the upper limit of the processing capability. Then, a target object bucket with a target object allocation quota reaching the preset allocation quota limit value may be selected from all the object buckets. Then, loop traversal allocation is performed for each target object bucket based on the preset object allocation rule to obtain a supplementary object allocation quota for each target object bucket. That is, the object bucket list 2 is sorted, and then loop traversal allocation is performed for each object bucket in turn based on the sorted order until the preset object allocation rule is met to obtain the supplementary object allocation quota for each target object bucket.

It is worth noting that an execution priority of a data processing task generated based on the target object allocation quota is higher than an execution priority of a supplementary data processing task generated based on the supplementary object allocation quota, that is, the data processing task within the target object allocation quota is preferentially processed.

By sorting the data processing tasks of the object buckets in terms of whether the preset allocation quota limit value is reached and uniformly performing loop traversal allocation for each object bucket, fairness of the processing volume of expired objects between different object buckets can be ensured. Moreover, when the lifecycle system increases the upper limit of the processing capability, the expanded volume can be uniformly allocated to each object bucket without resource tilt.

In a possible implementation, the generating a data processing task corresponding to each object bucket based on the target object allocation quota for each object bucket and the manifest file corresponding to each object bucket includes: for each object bucket, among at least one manifest file of the object bucket, selecting a manifest file with a number of expired objects not greater than a target object allocation quota of the object bucket as a target manifest file; and generating the data processing task corresponding to each object bucket based on the target manifest file of each object bucket.

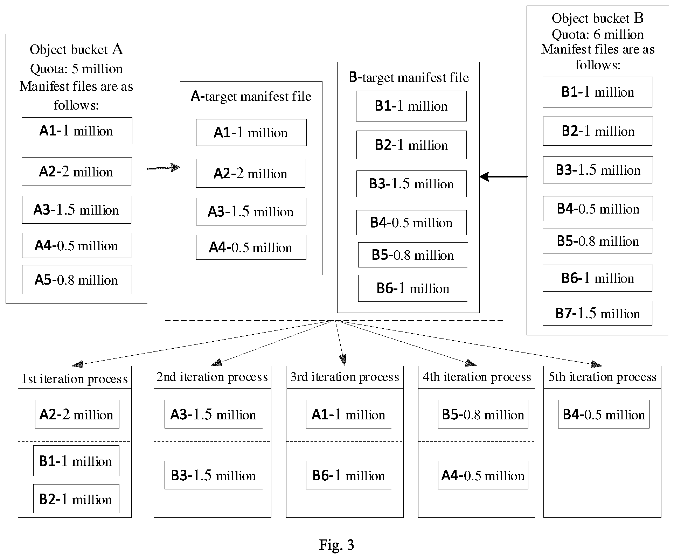

Exemplarily, in the case where the number of expired objects in the manifest file of the object bucket may be greater than the target object allocation quota of the object bucket, with reference to Fig. 3, the target manifest file with the number of expired objects not greater than the target object allocation quota of the object bucket may be first selected from the manifest files, and the corresponding data processing task is generated for each object bucket based on the target manifest file of each object bucket, to ensure that the number of expired objects corresponding to the data processing task of each object bucket is within the target object allocation quota of the object bucket.

It should be understood that if the target manifest file with the number of expired objects equal to the object allocation quota of the object bucket cannot be selected, the target manifest file with the number of expired objects less than and closest to the target object allocation quota of the object bucket is selected, such as the target manifest file selected for the object bucket B in Fig. 3. Alternatively, task allocation may be performed for part of expired objects in the manifest file, for example, replacing the target manifest file B5 selected for the object bucket B in Fig. 3 with B7, but it is necessary to specify that the number of expired objects that can be allocated by B7 is 1 million, so that the number of expired objects in the target manifest file is equal to the target object allocation quota.

In a possible implementation, the generating the data processing task corresponding to each object bucket based on the target manifest file of each object bucket includes: marking, based on a number of expired objects in the target manifest file of each object bucket, target manifest files with a number of expired objects belonging to a same data range as a same manifest file priority, where different manifest file priorities correspond to different data ranges; and generating the data processing task corresponding to each object bucket based on a marked target manifest file of each object bucket, and configuring a priority of the target manifest file as an execution priority of the data processing task.

Exemplarily, the following process is iteratively performed until manifest file priorities of all the target manifest files of the object buckets are marked: determining a first manifest file with the largest number of expired objects from all the target manifest files of the object buckets; and for each of the object buckets other than the object bucket corresponding to the first manifest file, selecting a second manifest file from the target manifest file of the object bucket based on the first manifest file, where the second manifest file represents a manifest file combination with the number of expired objects in the target manifest file of the object bucket being closest to the number of expired objects in the first manifest file, and marking the first manifest file and the second manifest file as having the same manifest file priority.

Exemplarily, with continued reference to Fig. 3, in the first iteration process, the first manifest file with the largest number of expired objects is first found out, for example, the number of expired objects in A2 of the object bucket A is 2 million. Then, for each of the other object buckets other than the object bucket, the closest second manifest file is combined, for example, the sum of the number of expired objects in B1 and B2 of the object bucket B is 2 million. By analogy, the second iteration and the third iteration are then continued in the remaining target manifest files until manifest file priorities of all the target manifest files are marked.

It is worth noting that data processing tasks generated by manifest files with the same manifest file priority have the same execution priority, and data processing tasks generated by manifest files with different manifest file priorities have different execution priorities. The priority of the manifest file marked in the former iteration process may be higher than the priority of the manifest file marked in the latter iteration process, or the priority of the manifest file marked in the latter iteration process may be higher than the priority of the manifest file marked in the former iteration process. It is only necessary to ensure that manifest files with similar number of expired objects have the same processing priority, thereby ensuring that data processing tasks with similar number of expired objects have the same processing priority.

In this way, it is ensured that object buckets with different numbers of expired objects may execute data processing tasks in parallel, and the order of task execution is not affected because of differences in the lifecycle rule and the number of expired objects, thereby affecting the timeliness and efficiency of task completion.

After generating the data processing task corresponding to each object bucket based on the target manifest file of each object bucket, the supplementary data processing task corresponding to each target object bucket may be determined based on the supplementary object allocation quota for each target object bucket and the remaining manifest files. The processes are similar, and details are not described herein again in the present disclosure.

It should be noted that the priority of the manifest file selected based on the object allocation supplementary quota of the target object bucket and the remaining manifest file is lower than that of the above target manifest file. Correspondingly, the execution priority of the data processing task generated based on the target object allocation quota is higher than that of the supplementary data processing task generated based on the object allocation supplementary quota, that is, the data processing task within the target object allocation quota is preferentially processed.

Then, the data processing tasks generated by the manager process are allocated to the worker process for execution, and the worker process may perform parallel processing on tasks with the same execution priority.

In a possible implementation, the controlling the data processing task of each object bucket to be executed in parallel includes: in an execution process of the data processing task of each object bucket being executed in parallel, matching an expired object corresponding to the data processing task using a lifecycle policy of each object bucket, and deleting or transferring a matched expired object.

Exemplarily, in the execution process of the data processing task corresponding to each of the object buckets, each object in the list of scanned objects corresponding to the data processing task is matched with a lifecycle rule corresponding to the object bucket in turn, and a deletion operation or a transfer operation is performed on each expired object that hits the lifecycle rule.

Exemplarily, in the execution process of the data processing task, a request is sent to the object storage service, each object in the list of scanned objects is matched with the lifecycle rule corresponding to the object bucket in turn, and the deletion operation or the transfer operation is performed on the expired object that hits the lifecycle rule, which is determined according to the lifecycle rule that is hit.

It is easy to understand that the above process is to execute the data processing task based on the manifest file granularity of the manifest file. However, in practical application, a case may occur where the manifest file is partially allocated or the execution of the data processing task is interrupted. Therefore, it is also necessary to divide the task based on the granularity of the number of expired objects.

Exemplarily, in the process of the worker process executing the data processing task, the processing progress of the scanned list may be recorded. When the manifest file is partially allocated or the data processing task is interrupted, the next round of data processing task may continue to be executed from the breakpoint to avoid repeated processing.

In a possible implementation, the controlling the data processing task of each object bucket to be executed in parallel includes:
in a process of controlling the data processing task of each object bucket to be executed in parallel, in response to the data processing task carrying start object information and start position information, locating a specified object based on the start object information and the start position information, and starting processing from the specified object.

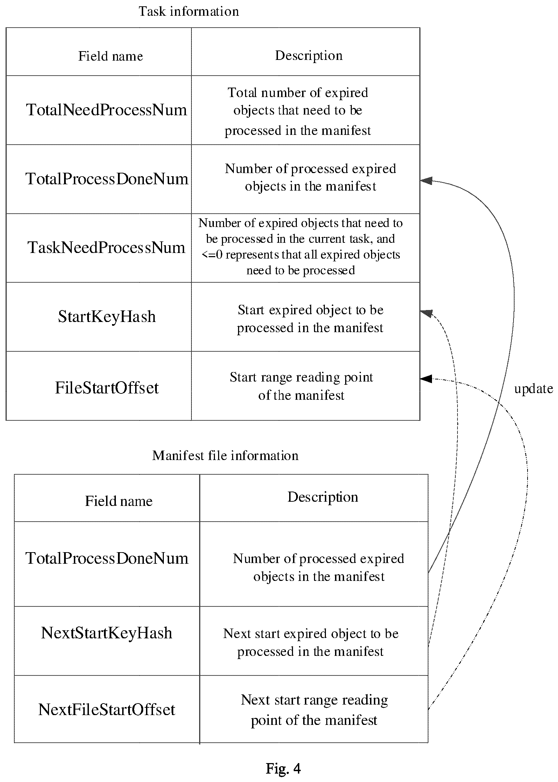

Exemplarily, with reference to Fig. 4, when the data processing task is generated, corresponding task information may be generated based on the manifest file. TotalNeedProcessNum represents the total number of expired objects in the manifest file, TotalProcessDoneNum represents the number of processed expired objects in the manifest file, TaskNeedProcessNum represents the number of expired objects that need to be processed in the current task, StartKeyHash represents a hash value of the first object that is not matched with the rule in the manifest file, that is, the start object information, FileStartOffset represents a range reading point of the first object that is not matched with the rule in the manifest file, that is, the start position information, and StartKeyHash and FileStartOffset are used to locate the first object that is not matched with the rule. Values of TotalProcessDoneNum, StartKeyHash, and FileStartOffset are updated by the lifecycle system in the process of executing the task.

Exemplarily, in the generation process of the data processing task, partial allocation or full allocation of the manifest file may be implemented. For example, when the number of expired objects that can be processed is greater than the total number of expired objects in the manifest file, the manifest file is fully allocated, and TaskNeedProcessNum is set to -1. Otherwise, the manifest file is partially allocated, and TaskNeedProcessNum is set to the number of expired objects that can be processed. Alternatively, assuming that the execution of the data processing task M is interrupted, the number of remaining expired objects that are not processed in the manifest file corresponding to the data processing task M is TotalNeedProcessNum-TotalProcessDoneNum, which is denoted as N here. Then, when the next round of data processing task is generated, N is used as the number of expired objects in the manifest file to re-allocate the object quota and generate the data processing task.

By specifying TaskNeedProcessNum, StartKeyHash, and FileStartOffset in the task information to process all the expired objects or part of the expired objects in the manifest file, the division of tasks based on the granularity of the number of expired objects is realized.

Exemplarily, when the worker process executes the data processing task, the specified object is found in the manifest file according to FileStartOffset and StartKeyHash of the task information. That is, the worker process reads from the start position of the manifest file until it reads the range of FileStartOffset, and then calculates line by line whether the hash value of the line matches StartKeyHash. If yes, it represents that the position of the specified object is read, and then rule matching is performed. In the process of processing by the worker process, the hash value and the range of each matched object are recorded in the memory.

Exemplarily, after the number of objects that are matched with the rule reaches TaskNeedProcessNum or the task is interrupted, the worker process may mark the manifest file information based on the fields shown in Fig. 4 and exit the task. When the task is allocated next time, the task information of the new data processing task may be obtained based on the manifest file information. That is, the first object that is not matched with the rule in the list of scanned objects corresponding to the data processing task is marked as the target object to obtain a new manifest file. When the new data processing task is generated based on the new manifest file, the object information of the target object is used as the specified object for the new data processing task to start processing.

According to the above method, the capability of resuming a manifest file of an object bucket at a breakpoint may be realized to realize fine-grained and reentrant task scheduling. Therefore, repeated and invalid processing of the manifest file may be effectively avoided, the request pressure on the object storage service is reduced, and the timeliness and efficiency of task completion are further improved.

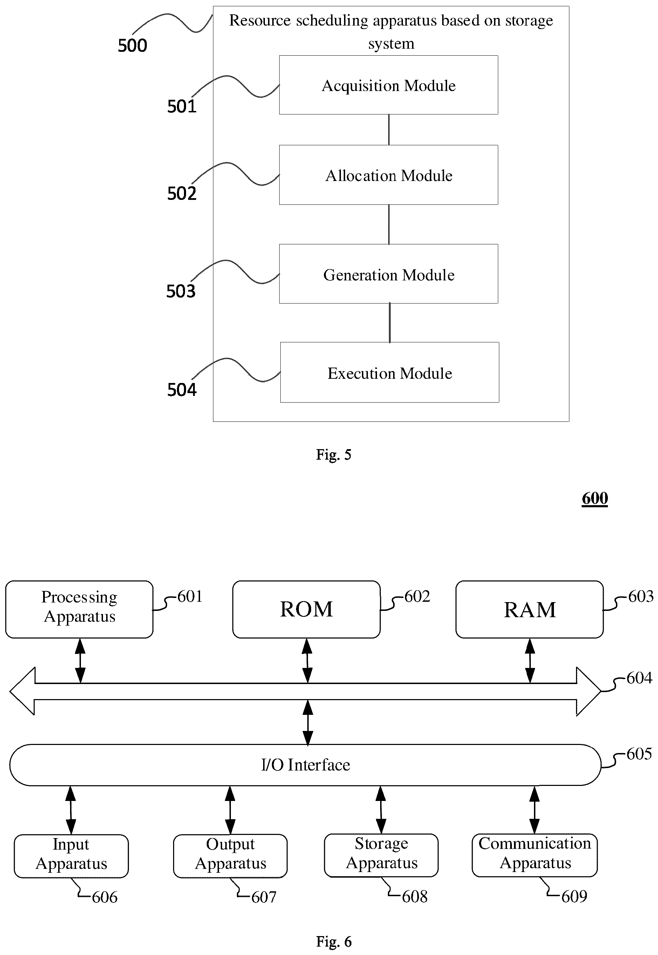

Based on the same concept, the embodiments of the present disclosure further provide a resource scheduling apparatus based on a storage system. With reference to Fig. 5, the resource scheduling apparatus 500 based on a storage system includes:
an acquisition module 501 configured to acquire a manifest file respectively corresponding to each object bucket in a storage system, where the manifest files include a list of scanned objects of the object bucket and a number of expired objects in the list of scanned objects;
an allocation module 502 configured to perform loop traversal allocation for each object bucket based on a preset object allocation rule to obtain a target object allocation quota for each object bucket, where the preset allocation rule is used to control object allocation for the object buckets based on a single-bucket allocation quota limit value and/or a total allocation quota limit value;
a generation module 503 configured to generate a data processing task corresponding to each object bucket based on the target object allocation quota for each object bucket and the manifest file corresponding to each object bucket, where the data processing task is a task executed according to a manifest file granularity, and a number of expired objects in a manifest file executed by a total data processing task of an object bucket is not greater than a target object allocation quota for the object bucket; and
an execution module 504 configured to control the data processing task of each object bucket to be executed in parallel.

Optionally, the generation module 503 is configured to:
for each object bucket, among at least one manifest file of the object bucket, select a manifest file with a number of expired objects not greater than a target object allocation quota of the object bucket as a target manifest file; and
generate the corresponding data processing task for each of the object buckets based on the respective target manifest file of each of the object buckets.

Optionally, the generation module 503 is configured to:
mark, based on the number of expired objects in the target manifest file of each object bucket, target manifest files with the number of expired objects belonging to a same data range as a same manifest file priority, where different manifest file priorities correspond to different data ranges; and
generate the data processing task corresponding to each object bucket based on a marked target manifest file of each object bucket, and configure a priority of the target manifest file as an execution priority of the data processing task.

Optionally, the allocation module 502 is configured to:
sort object buckets based on a preset bucket sorting rule to obtain a sequence of object buckets, where the preset bucket sorting rule is used to indicate sorting in ascending order according to an allocated object allocation quota in an object bucket, and sorting object buckets with equal allocated object allocation quota in ascending order based on the number of expired objects;
allocate equal object allocation quota to each object bucket in turn based on the sequence of object buckets; and
repeatedly perform the step of sorting object buckets based on a preset bucket sorting rule to obtain a sequence of object buckets and the step of allocating equal object allocation quota to each object bucket in turn based on the sequence of object buckets until the preset object allocation rule is met, so as to obtain the target object allocation quota for each object bucket.

Optionally, the preset object allocation rule includes at least one selected from a group consisting of:
in response to an allocated object allocation quota of an object bucket reaching the number of expired objects of the object bucket and/or the single-bucket allocation quota limit value, ending object allocation for the object bucket, where the single-bucket allocation quota limit value includes at least one selected from a group consisting of an object processing quota limit value and a preset allocation quota limit value;
in response to a total object allocation quota of all object buckets reaching the total allocation quota limit value, ending object allocation for all the object buckets; and
in response to the allocated object allocation quota of each object bucket reaching a corresponding number of expired objects, ending object allocation for all the object buckets.

Optionally, the resource scheduling apparatus 500 based on the storage system further includes a supplement module. The supplement module is configured to:
after the target object allocation quota for each object bucket is obtained, in response to the total object allocation quota of all the object buckets being less than the total allocation quota limit value, select, from all the object buckets, a target object bucket whose target object allocation quota reaching the preset allocation quota limit value;
perform loop traversal allocation for each target object bucket based on the preset object allocation rule to obtain a supplementary object allocation quota for each target object bucket; and
generate a supplementary data processing task corresponding to each target object bucket based on the supplementary object allocation quota for each target object bucket and a manifest file corresponding to each target object bucket, where an execution priority of the data processing task is higher than an execution priority of the supplementary data processing task.

Optionally, the execution module 504 is configured to:
in an execution process of the data processing task of each object bucket being executed in parallel, match an expired object corresponding to the data processing task using a lifecycle policy of each object bucket, and deleting or transferring a matched expired object.

Optionally, the execution module 504 is configured to:
in the process of controlling the data processing task of each object bucket to be executed in parallel, in response to the data processing task carrying start object information and start position information, locate a specified object based on the start object information and the start position information, and starting processing from the specified object.

Optionally, the acquisition module 501 is configured to:
acquire a lifecycle policy of each object bucket in the storage system; and
sequentially scan objects of each object bucket, match scanned objects based on a corresponding lifecycle policy to obtain matched expired objects, count the number of expired objects, and generate at least one manifest file for each object bucket upon completion of scanning.

Based on the same concept, the embodiments of the present disclosure further provide a non-transitory computer-readable storage medium storing computer programs which, upon being executed by a processor, perform the steps of the above resource scheduling method based on the storage system.

Based on the same concept, an embodiment of the present disclosure further provides an electronic device. The electronic device may include:
at least one memory, storing computer programs; and
at least one processor configured to execute the computer programs in the at least one memory to perform the steps of the above resource scheduling method based on the storage system.

Based on the same concept, an embodiment of the present disclosure further provides a computer program product including computer programs which, upon being executed by a processor, perform the steps of the above resource scheduling method based on the storage system.

Reference is made to Fig. 6 below, which illustrates a structural schematic diagram of an electronic device 600 suitable for implementing the embodiments of the present disclosure. The terminal device in the embodiments of the present disclosure may include, but is not limited to, a mobile terminal such as a mobile phone, a laptop, a digital broadcast receiver, a personal digital assistant (PDA), a tablet computer (PAD), a portable media player (PMP), and an in-vehicle terminal (such as an in-vehicle navigation terminal), and a fixed terminal such as a digital TV and a desktop computer. The electronic device shown in Fig. 6 is only an example and should not impose any limitation to the function and usage scope of the embodiments of the present disclosure.

As shown in Fig. 6, the electronic device 600 may include a processing apparatus 601 (such as a central processing unit, a graphics processing unit, etc.), which may perform various appropriate actions and processing according to a program stored in a read-only memory (ROM) 602 or a program loaded from a storage apparatus 608 into a random access memory (RAM) 603. The RAM 603 also stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatus may be connected to the I/O interface 605: an input apparatus 606 including, for example, a touchscreen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 may allow the electronic device 600 to perform wireless or wired communication with other devices to exchange data. Although Fig. 6 shows the electronic device 600 having various apparatuses, it should be understood that not all of the illustrated apparatuses are required to be implemented or provided. Alternatively, more or fewer apparatuses may be implemented or provided.

In particular, according to the embodiments of the present disclosure, the processes described above with reference to the flowcharts may be implemented as a computer software program. For example, the embodiments of the present disclosure include a computer program product, which includes a computer program carried on a non-transitory computer-readable medium, and the computer program includes program codes for executing the methods shown in the flowcharts. In such embodiments, the computer program may be downloaded and installed from a network through the communication apparatus 609, or installed from the storage apparatus 608, or installed from the ROM 602. When the computer program is executed by the processing apparatus 601, the above functions defined in the methods of the embodiments of the present disclosure are executed.

It should be noted that the above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program. The program may be used by or in combination with an instruction execution system, apparatus, or device. In the present disclosure, the computer-readable signal medium may include a data signal propagated in a baseband or as a part of a carrier wave, and computer-readable program codes are carried in the data signal. The data signal propagated in this manner may be in various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes included in the computer-readable medium may be transmitted by any suitable medium, including but not limited to an electrical wire, an optical cable, a radio frequency (RF), or any suitable combination thereof.

In some implementations, communication may be performed by using any currently known or future developed network protocol such as the hypertext transfer protocol (HTTP), and may be interconnected with digital data communication (for example, a communication network) in any form or medium. Examples of the communication network include a local area network ("LAN"), a wide area network ("WAN"), an inter-network (for example, the Internet), and an end-to-end network (for example, an ad hoc end-to-end network), as well as any currently known or future developed network.

The above computer-readable medium may be included in the above electronic device, or may exist alone without being assembled into the electronic device.

The above computer-readable medium carries one or more programs which, upon being executed by the electronic device, cause the electronic device to perform the following steps: acquiring a manifest file respectively corresponding to each object bucket in a storage system, where the manifest file includes a list of scanned objects of the object buckets and the number of expired objects in the list of scanned objects; performing loop traversal allocation for each object bucket based on a preset object allocation rule to obtain a target object allocation quota for each object bucket, where the preset allocation rule is used to control object allocation for the object bucket based on a single-bucket allocation quota limit value and/or a total allocation quota limit value; generating a data processing task corresponding to each object bucket based on the target object allocation quota for each object bucket and the manifest file corresponding to each object bucket, where the data processing task is a task executed according to a manifest file granularity, and the number of expired objects in a manifest file executed by a total data processing task of an object bucket is not greater than the target object allocation quota for the object bucket; and controlling the data processing task of each object bucket to be executed in parallel.

The computer program codes for performing the operations of the present disclosure may be written in one or more programming languages or a combination thereof. The preceding programming languages include object-oriented programming languages such as Java, Smalltalk, C++, and also conventional procedural programming languages such as the "C" programming language or similar programming languages. The program codes may be executed entirely on the user's computer, partly on the user's computer, as a stand-alone software package, partly on the user's computer and partly on a remote computer, or entirely on the remote computer or server. In the scenario involving the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, be executed substantially concurrently, or the blocks may sometimes be executed in the reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules involved in the embodiments of the present disclosure may be implemented by software, or may be implemented by hardware. The name of the module does not constitute a limitation to the module itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept. For example, the above features and technical features with similar functions disclosed in the present disclosure (but not limited to) are replaced with each other to form technical solutions.

In addition, although operations are depicted in a particular order, this should not be understood as requiring that these operations are performed in the specific order shown or in a sequential order. Under certain circumstances, multitasking and parallel processing may be advantageous. Likewise, although the above discussion contains several specific implementation details, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments individually or in any suitable sub-combination.

Although the subject matter has been described in language specific to structural features and/or logical actions of methods, it should be understood that the subject matter defined in the appended claims is not necessarily limited to the specific features or actions described above. Rather, the specific features and actions described above are merely example forms of implementing the claims. Regarding the apparatus in the above embodiments, the specific manner in which each module performs operations has been described in detail in the embodiments related to the method, and will not be described in detail here.

## Claims

1. A resource scheduling method based on a storage system, comprising:
acquiring a manifest file respectively corresponding to each object bucket in the storage system, wherein the manifest file comprises a list of scanned objects of the object bucket and a number of expired objects in the list of scanned objects;
performing loop traversal allocation for each object bucket based on a preset object allocation rule to obtain a target object allocation quota for each object bucket, wherein the preset allocation rule is used to control object allocation for the object bucket based on a single-bucket allocation quota limit value and/or a total allocation quota limit value;
generating a data processing task corresponding to each object bucket based on the target object allocation quota for each object bucket and the manifest file corresponding to each object bucket, wherein the data processing task is a task executed according to a manifest file granularity, and a number of expired objects in a manifest file executed by a total data processing task of an object bucket is not greater than a target object allocation quota for the object bucket; and
controlling the data processing task of each object bucket to be executed in parallel.

2. The resource scheduling method based on the storage system according to claim 1, wherein the generating a data processing task corresponding to each object bucket based on the target object allocation quota for each object bucket and the manifest file corresponding to each object bucket comprises:
for each object bucket, among at least one manifest file of the object bucket, selecting a manifest file with a number of expired objects not greater than a target object allocation quota of the object bucket as a target manifest file; and
generating the data processing task corresponding to each object bucket based on the target manifest file of each object bucket.

3. The resource scheduling method based on the storage system according to claim 2, wherein the generating the data processing task corresponding to each object bucket based on the target manifest file of each object bucket comprises:
marking, based on a number of expired objects in the target manifest file of each object bucket, target manifest files with a number of expired objects belonging to a same data range as a same manifest file priority, wherein different manifest file priorities correspond to different data ranges; and
generating the data processing task corresponding to each object bucket based on a marked target manifest file of each object bucket, and configuring a priority of the target manifest file as an execution priority of the data processing task.

4. The resource scheduling method based on the storage system according to any one of claims 1 to 3, wherein the performing loop traversal allocation for each object bucket based on a preset object allocation rule to obtain a target object allocation quota for each object bucket comprises:
sorting object buckets based on a preset bucket sorting rule to obtain a sequence of object buckets, wherein the preset bucket sorting rule is used to indicate sorting in ascending order according to an allocated object allocation quota in an object bucket, and sorting object buckets with equal allocated object allocation quota in ascending order based on a number of expired objects;
allocating equal object allocation quota to each object bucket in turn based on the sequence of object buckets; and
repeatedly performing the sorting object buckets based on a preset bucket sorting rule to obtain a sequence of object buckets and the allocating equal object allocation quota to each object bucket in turn based on the sequence of object buckets until the preset object allocation rule is met, so as to obtain the target object allocation quota for each object bucket.

5. The resource scheduling method based on the storage system according to any one of claims 1 to 3, wherein the preset object allocation rule comprises at least one selected from a group consisting of:
in response to an allocated object allocation quota of an object bucket reaching a number of expired objects of the object bucket and/or the single-bucket allocation quota limit value, ending object allocation for the object bucket, wherein the single-bucket allocation quota limit value comprises at least one selected from a group consisting of an object processing quota limit value and a preset allocation quota limit value;
in response to a total object allocation quota of all object buckets reaching the total allocation quota limit value, ending object allocation for all the object buckets; and
in response to the allocated object allocation quota of each object bucket reaching a corresponding number of expired objects, ending object allocation for all the object buckets.

6. The resource scheduling method based on the storage system according to claim 5, further comprising:
after the target object allocation quota for each object bucket is obtained, in response to the total object allocation quota of all the object buckets being less than the total allocation quota limit value, selecting, from all the object buckets, a target object bucket whose target object allocation quota reaching the preset allocation quota limit value;
performing loop traversal allocation for each target object bucket based on the preset object allocation rule to obtain a supplementary object allocation quota for each target object bucket; and
generating a supplementary data processing task corresponding to each target object bucket based on the supplementary object allocation quota for each target object bucket and a manifest file corresponding to each target object bucket, wherein an execution priority of the data processing task is higher than an execution priority of the supplementary data processing task.

7. The resource scheduling method based on the storage system according to any one of claims 1 to 3, wherein the controlling the data processing task of each object bucket to be executed in parallel comprises:
in an execution process of the data processing task of each object bucket being executed in parallel, matching an expired object corresponding to the data processing task using a lifecycle policy of each object bucket, and deleting or transferring a matched expired object.

8. The resource scheduling method based on the storage system according to any one of claims 1 to 3, wherein the controlling the data processing task of each object bucket to be executed in parallel comprises:
in a process of controlling the data processing task of each object bucket to be executed in parallel, in response to the data processing task carrying start object information and start position information, locating a specified object based on the start object information and the start position information, and starting processing from the specified object.

9. The resource scheduling method based on the storage system according to any one of claims 1 to 3, wherein the acquiring a manifest file respectively corresponding to each object bucket in the storage system comprises:
acquiring a lifecycle policy of each object bucket in the storage system; and
sequentially scanning objects of each object bucket, matching scanned objects based on a corresponding lifecycle policy to obtain matched expired objects, counting a number of expired objects, and generating at least one manifest file for each object bucket upon completion of scanning.

10. A resource scheduling apparatus based on a storage system, comprising:
an acquisition module configured to acquire a manifest file respectively corresponding to each object bucket in the storage system, wherein the manifest file comprises a list of scanned objects of the object bucket and a number of expired objects in the list of scanned objects;
an allocation module configured to perform loop traversal allocation for each object bucket based on a preset object allocation rule to obtain a target object allocation quota for each object bucket, wherein the preset allocation rule is used to control object allocation for the object bucket based on a single-bucket allocation quota limit value and/or a total allocation quota limit value;
a generation module configured to generate a data processing task corresponding to each object bucket based on the target object allocation quota for each object bucket and the manifest file corresponding to each object bucket, wherein the data processing task is a task executed according to a manifest file granularity, and a number of expired objects in a manifest file executed by a total data processing task of an object bucket is not greater than a target object allocation quota for the object bucket; and
an execution module configured to control the data processing task of each object bucket to be executed in parallel.

11. The resource scheduling apparatus based on the storage system according to claim 1, wherein the generation module is further configured to:
for each object bucket, among at least one manifest file of the object bucket, select a manifest file with a number of expired objects not greater than a target object allocation quota of the object bucket as a target manifest file; and
generate the data processing task corresponding to each object bucket based on the target manifest file of each object bucket.

12. The resource scheduling apparatus based on the storage system according to claim 2, wherein the generation module is further configured to:
mark, based on a number of expired objects in the target manifest file of each object bucket, target manifest files with a number of expired objects belonging to a same data range as a same manifest file priority, wherein different manifest file priorities correspond to different data ranges; and
generate the data processing task corresponding to each object bucket based on a marked target manifest file of each object bucket, and configure a priority of the target manifest file as an execution priority of the data processing task.

13. The resource scheduling apparatus based on the storage system according to any one of claims 10 to 12, wherein the allocation module is further configured to:
sort object buckets based on a preset bucket sorting rule to obtain a sequence of object buckets, wherein the preset bucket sorting rule is used to indicate sorting in ascending order according to an allocated object allocation quota in an object bucket, and sorting object buckets with equal allocated object allocation quota in ascending order based on a number of expired objects;
allocate equal object allocation quota to each object bucket in turn based on the sequence of object buckets; and
repeatedly perform the sorting object buckets based on a preset bucket sorting rule to obtain a sequence of object buckets and the allocating equal object allocation quota to each object bucket in turn based on the sequence of object buckets until the preset object allocation rule is met, so as to obtain the target object allocation quota for each object bucket.

14. A non-transitory computer-readable storage medium storing computer programs, wherein the computer programs upon being executed by a processor, perform the method according to any one of claims 1 to 9.

15. An electronic device, comprising:
at least one memory storing computer programs; and
at least one processor configured to execute the computer programs in the at least one memory to perform the method according to any one of claims 1 to 9.
